# EUROPÄISCHE PATENTSCHRIFT

(11) **EP 1 744 930 B1**
(45) Veröffentlichungstag und Bekanntmachung des Hinweises auf die Patenterteilung: **29.10.2008**
(21) Anmeldenummer: 05742677.7
(22) Anmeldetag: 12.05.2005
(51) Int. Cl.: B60N 2/34, B60P 3/38

(54) **SITZLIEGEBANK FÜR WOHNMOBILE ODER DERGLEICHEN**
SEAT RECLINER BENCH FOR MOTOR HOMES OR THE LIKE
BANQUETTE RABATTABLE POUR CAMPING-CARS OU ANALOGUES

(30) Priorität: 12.05.2004 DE 102004023404
(43) Veröffentlichungstag der Anmeldung: 24.01.2007
(73) Patentinhaber: WESTFALIA Van Conversion GmbH, 33378 Rheda-Wiedenbrück (DE)
(72) Erfinder: BRÜCKNER, Reinhold, 33442 Herzebrock-Clarholz (DE)
(74) Vertreter: Rolf, Gudrun
(86) Internationale Anmeldenummer: PCT/EP2005/005169
(87) Internationale Veröffentlichungsnummer: WO 2005/110804

(56) Entgegenhaltungen:
- DE-A1- 4 100 321
- DE-A1- 19 544 014
- DE-C1- 19 925 900
- DE-U1- 29 911 948
- GB-A- 1 439 335

## Beschreibung

Die Erfindung bezieht sich auf eine Sitzliegebank gemäß dem Oberbegriff des Patentanspruchs 1, wie in DE-A-4100321 offenbart.

Bei den allgemein bekannten Sitzliegebänken für Freizeitfahrzeuge wird in der Regel sowohl die Sitzfläche als auch die Rückenlehnenfläche in der Liegenposition als Liegefläche zum Schlafen genutzt. Dazu werden die Sitzfläche und die Rückenlehnenfläche in eine möglichst horizontale Ausrichtung gebracht, wozu spezielle Beschläge verwendet werden, um die Rückenlehne nach hinten hin entsprechend weit absenken und die Sitzfläche mit ihrem hinteren Bereich anheben zu können.

Es ist eine Sitzliegebank der eingangs genannten Art bekannt, bei der nicht nur die Rückseite des Rückenlehnenteils sondern auch die Unterseite des Sitzteils nach oben hin liegend gewendet werden können, um die Liegefläche zu bilden. Dies hat den Vorteil, die unkonturierte Rückseite des Rückenlehnenteils zur Bildung einer ebenen Liegefläche nutzen zu können. Allerdings sind bei dieser bekannten Ausführung aufwendige Mechaniken notwendig, um das Sitzteil und das Rückenlehnenteil der Sitzliegebank von der Sitzposition in die Liegenposition umbauen zu können.

Der Erfindung liegt die Aufgabe zugrunde, eine Sitzliegebank zu schaffen, bei der nicht nur die Rückseite des Rückenlehnenteils zur Bildung der Liegenfläche nach oben hin liegend verschwenkt werden kann sondern das Verschwenken sehr einfach vorgenommen werden kann, ohne am Sitzteil Umbauten vornehmen zu müssen.

Diese Aufgabe wird bei einer Sitzliegebank der eingangs genannten Art durch die kennzeichnenden Merkmale des Patentanspruchs 1 gelöst.

Für die Erfindung ist wesentlich, die Sitzliegebank so verschwenken zu können, daß die relative Lage des Sitzteils und des Rückenlehnenteils zueinander beibehalten bleibt, denn das Sitzteil und das Rückenlehnenteil werden gemeinsam um eine einzige Drehachse gekippt, wobei in der Liegenposition das Sitzteil ohne Funktion ist. Die Umwandlung von der Sitzposition in die Liegenposition erfolgt, indem nach entsprechender Entsicherung die gesamte Bank vornüber soweit gekippt wird, bis die ebene Rückseite des Rückenlehnenteils nach oben hin liegend ausgerichtet ist und darauf das Bettzeug aufgebracht werden kann. Vorteilhafterweise ist die zugehörige Matratze zugleich an der Rückseite des Rükkenlehnenteils fest angeordnet und schwenkt dementsprechend bei der Umwandlung von der Sitzposition in die Liegenposition sowie umgekehrt mit.

Weitere vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: in schematischer Darstellung die Seitansicht einer Sitzliegebank in der Sitzposition einschließlich einem gegenüberliegend angeordneten Vordersitz,
- Fig. 2: eine der Fig. 1 entsprechende Darstellung jedoch in der Liegenposition der Sitzliegebank,
- Fig. 3: eine perspektivische Seitansicht der Sitzliegebank in leicht geänderter Ausführung,
- Fig. 4: eine weitere Variante der Sitzliegebank,
- Fig. 5: eine perspektivische Vorderansicht der Sitzliegebank in teilweise aufgebrochener Darstellung des Rückenlehnenteils,
- Fig. 6: eine perspektivische Rückansicht der Sitzliegebank aufgebrochener Wiedergabe des Rückenlehnenteils und
- Fig. 7: eine perspektivische Vorderansicht der Sitzliegebank in einer weiteren Ausführungsform.

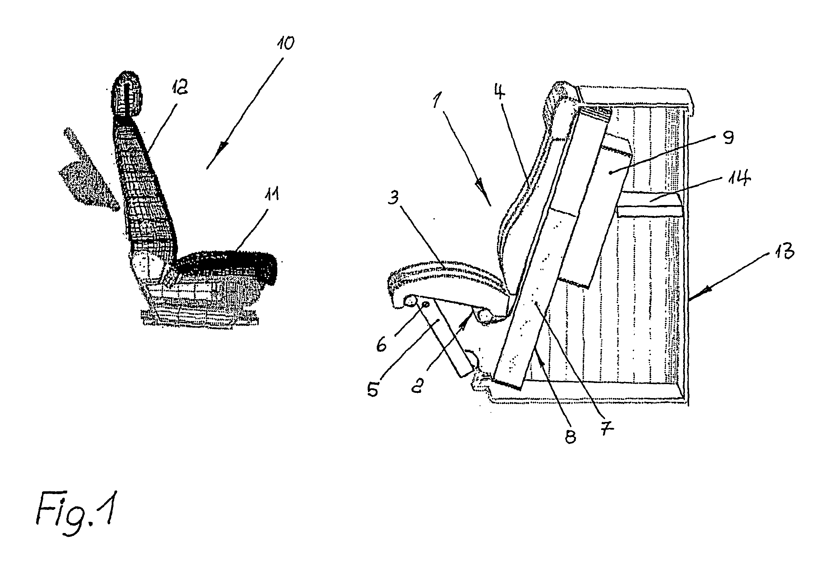

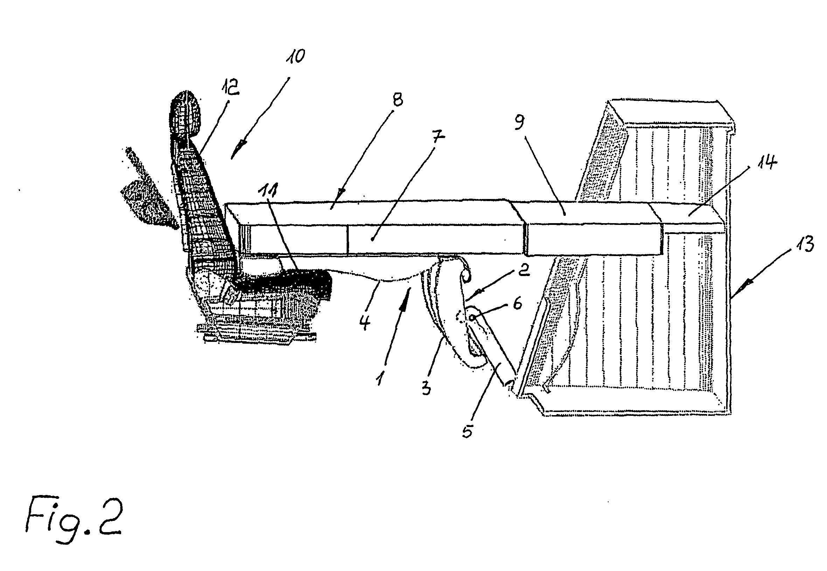

In Fig. 1 erkennt man im einzelnen eine Sitzliegebank 1 mit einem im einzelnen nicht näher dargestellten Gestell 2, auf dem gemeinsam ein Sitzteil 3 und ein Rückenlehnenteil 4 angeordnet sind. Das Gestell 2 ist an einer Stützvorrichtung 5, die in dem betreffenden Fahrzeug feststehend angeordnet ist, zwischen einer Sitzposition, die sich aus Fig. 1 ergibt, und einer Liegenposition, die in Fig. 2 dargestellt ist, schwenkbar gelagert. Am Oberende der Stützvorrichtung 5 findet sich dazu eine einzige Schwenkachse 6, um die das Sitzteil 3 und das Rückenlehnenteil 4 gemeinsam gekippt werden können. Dies geschieht aus der Sitzposition heraus, bei dem das Sitzteil 3 und das Rückenlehnenteil 4 vornüber gekippt werden, wonach die Rückseite des Rückenlehnenteils 4 in der Liegenposition horizontal ausgerichtet ist, was in Fig. 2 wiedergegeben ist. In der Liegenposition hat das Sitzteil 3 keine Funktion, es ist vielmehr in einen Freiraum nach unten hin geschwenkt, der wegen des notwendigen Bodenabstandes der Oberseite des Rückenlehnenteils 4 in der Liegenposition ohnehin zur Aufnahme des Sitzteils 3 in der Liegenposition zur Verfügung steht.

An der Rückseite des Rückenlehnenteils 4 ist zumindest eine Matratze 7 fest angeordnet, die in der Sitzposition nach oben hin mit dem Rückenlehnenteil 4 abschließt, darüber jedoch nach unten hin bis an den Fahrzeugboden heran weiterreicht als das Rückenlehnenteil 4. Die Matratze 7 bildet mit ihrer von dem Rückenlehnenteil 4 abliegenden Seite eine Liegefläche 8, die durch ein zusätzliches Matratzenteil 9 vergrößert werden kann.

In der Einbaulage in dem betreffenden Fahrzeug sind in Fahrzeuglängsrichtung vor der Sitzliegebank 1 Vordersitze 10 angeordnet, die um eine vertikale Achse gedreht werden können, um sie von der üblichen Ausrichtung in eine entgegen der Fahrtrichtung gedrehte Position verschwenken zu können. Die Anordnung entgegen der Fahrtrichtung ist für einen der Vordersitze 10 in den Figuren 1 und 2 dargestellt. Der Sitz 10 weist in üblicher Weise ein Sitzteil 11 und ein Rückenlehnenteil 12 auf. Die Kombination der kippbaren Sitzliegebank 1 mit dem drehbaren Vordersitz 10 ergibt eine raumsparende Anordnung in der Liegenposition der Sitzliegebank 1, die in Fig. 2 zu erkennen ist. In der Liegenposition reicht das Lehnenteil 4 der Sitzliegebank 1 über das Sitzteil 11 des Vordersitzes 10 hinweg bis an dessen Rückenlehnenteil 12 heran. Dabei kann sich das Rückenlehnenteil 4 der Sitzliegebank 1 auf dem Sitzteil 11 des Vordersitzes 10 abstützen, wozu die Anlehnkontur des Rückenlehnenteils 4 der Sitzliegebank 1 und die Sitzkontur des Sitzteils 11 des Vordersitzes 10 aneinander angepaßt sein können.

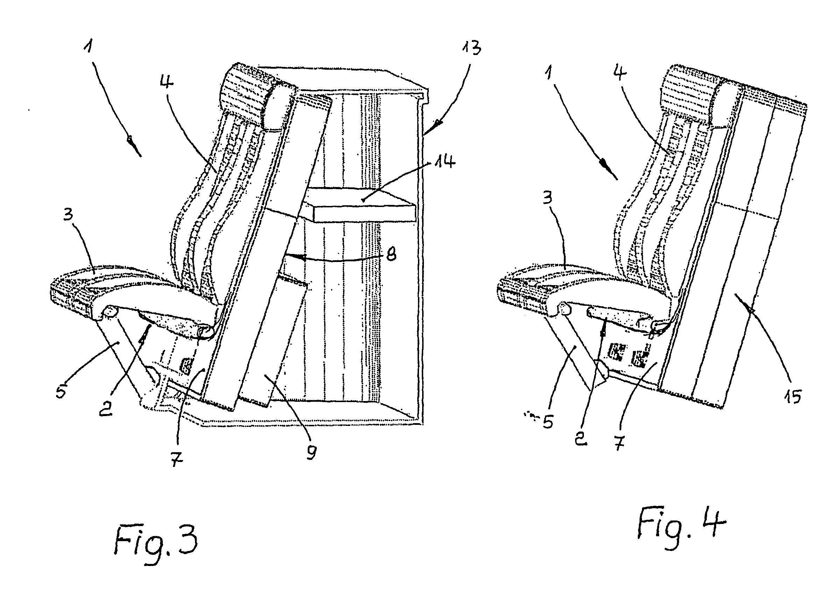

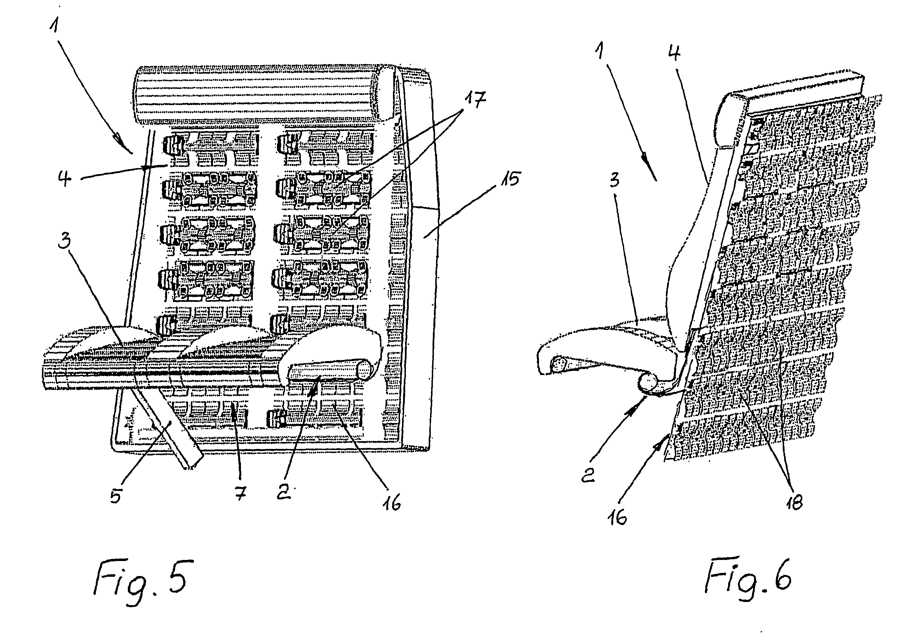

Eine weitere raumsparende Anordnung ergibt sich mit der Sitzliegebank 1 durch einen dahinter befindlichen Einbauschrank 13 in dem betreffenden Fahrzeug. Der Einbauschrank 13 hat eine nach vorn hin liegende Öffnung, die in der Sitzposition der Sitzliegebank 1 von deren Rückenlehnenteil 4 und der daran befindlichen Matratze 7 geschlossen wird. Am Rückenlehnenteil können seitliche Blenden 15 vorhanden sein, wie es Fig. 4 und 5 veranschaulichen, die zum einen die am Rückenlehnenteil 4 befindliche Matratze 7 seitlich abdecken und zum anderen so ausgebildet sein können, daß sie an die Öffnung des Einbauschranks 13 anschließen, um ein harmonisches Design in der Sitzposition von Sitzliegebank 1 und Einbauschrank 13 zu erzielen. Im Einbauschrank 13 befindet sich eine Konsole 14, an der das zusätzliche Matratzenteil 9, sofern es lose angeordnet ist, montiert werden kann. Das Matratzenteil 9 kann ebenso wie das weiter notwendige Bettzeug im Einbauschrank 13 untergebracht werden.

In anderer Ausführung kann das zusätzliche Matratzenteil 9 an der Matratze 7 angeordnet sein, indem es daran mittels einer Klettvorrichtung abnehmbar angeordnet oder mittels zumindest eines Scharniers daran schwenk- oder klappbar befestigt ist. Unterschiedliche Anordnungen und Ausbildungen des zusätzlichen Matratzenteils 9 zeigen die Figuren 1 - 3. Entscheidend ist in der Regel, mit dem Matratzenteil 9 die Länge der Liegefläche 8 der mit dem Rückenlehnenteil 4 festen Matratze 7 vergrößern zu können. So kann das zusätzliche Matratzenteil 9 an der Konsole 14 im Einbauschrank 13 schwenkbar angelenkt sein, in anderer Ausführung kann es in der Liegenposition der Sitzliegebank 1 von der Matratze 7 auf die Konsole 14 aufgeklappt werden.

Den Figuren 5 und 6 ist der innere Aufbau des Rückenlehnenteils 4 und der daran festen Matratze 7 zu entnehmen. Beide weisen ein gemeinsames Federungselement 16 in Gestalt eines Lattenrostes auf, der im Bereich des Rückenlehnenteils 4 nach vorn hin mit Federelementen 17 ausgestattet ist, die zur Erhöhung des Sitz- bzw. Anlehnkomforts des Rückenlehnenteils 4 dienen, der für die Benutzung der Sitzliegebank 1 in der Sitzposition wichtig ist. Im Bereich unterhalb der Liegefläche 8, also an der vom Rückenlehnenteil 4 abgekehrten Seite der Matratze 7 finden sich Federelemente 18 an dem Lattenrost des Federungssystems 16, die auf den Liegekomfort abgestimmt sind, der für die Nutzung der Sitzliegebank in der Liegeposition von Bedeutung ist.

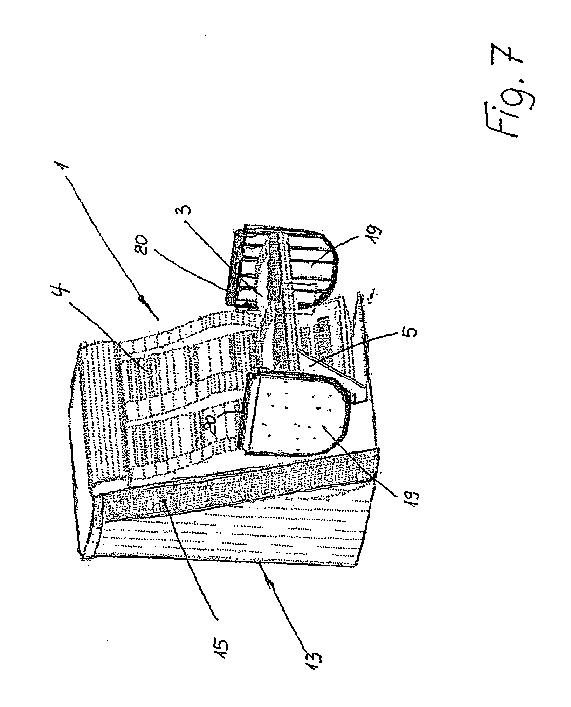

Fig. 7 zeigt eine weitere Besonderheit der Sitzliegebank 1. Am Sitzteil 3 sind Klapptische 19 angeordnet, an deren in abgeklappter Position nach oben hin liegenden Kanten Armlehnen 20 ausgebildet sind. Da beim Verschwenken von der Sitzposition in die Liegenposition und umgekehrt das Sitzteil 3 und das Rückenlehnenteil 4 in einem bewegt werden, schwenken hierbei auch die am Sitzteil 3 festen Klapptische 19 einschließlich der Armlehnen 20 mit.

## Patentansprüche

1. Sitzliegebank für Wohnmobile, Wohnanhänger, Vans oder dergleichen mit einem Gestell, auf dem ein Sitzteil und ein Rükkenlehnenteil angeordnet sind, wobei das Rückenlehnenteil zwischen einer Sitzposition und einer Liegenposition schwenkbar gelagert und in der Liegenposition die Rückseite des Rükkenlehnenteils nach oben hin liegend angeordnet ist,
**dadurch gekennzeichnet,**
**daß** das Gestell (2) einschließlich dem Sitzteil (3) und dem Rückenlehnenteil (4) zwischen der Sitzposition und der Liegenposition schwenkbar gelagert ist.

2. Sitzliegebank nach Anspruch 1,
**dadurch gekennzeichnet,**
**daß** an der Rückseite des Rückenlehnenteils (4) eine Matratze (7) fest angeordnet ist, die mit ihrer von der Rückseite des Rückenlehnenteils (4) abliegenden Seite eine Liegefläche (8) bildet.

3. Sitzliegebank nach Anspruch 2,
**dadurch gekennzeichnet,**
**daß** ergänzend zur Matratze (7) zwecks Vergrößerung der Liegefläche (8) ein Matratzenteil (9) vorgesehen ist.

4. Sitzliegebank nach Anspruch 3,
**dadurch gekennzeichnet,**
**daß** das Matratzenteil (9) an der an der Rückseite des Rückenlehnenteils (4) festen Matratze (7) lösbar befestigt ist.

5. Sitzliegebank nach Anspruch 3 oder 4,
**dadurch gekennzeichnet,**
**daß** das von der Matratze (7) lösbare oder relativ dazu lose Matratzenteil (9) an einem Einrichtungsteil (13) des betreffenden Fahrzeugs montierbar ist und in montierter Lage an die rückseitig am Rückenlehnenteil (4) angeordnete Matratze (7) in der gekippten Liegenposition von Sitzteil und Rückenlehnenteil (4) dicht anschließt.

6. Sitzliegebank nach Anspruch 3,
**dadurch gekennzeichnet,**
**daß** das Matratzenteil (9) in der Nichtgebrauchslage an der die Liegefläche (8) bildenden Seite der Matratze anliegend angeordnet ist.

7. Sitzliegebank nach Anspruch 6,
**dadurch gekennzeichnet,**
**daß** das Matratzenteil (9) an dem Rückenlehnenteil (4) oder an der daran fest angeordneten Matratze (7) schwenkbar angelenkt ist.

8. Sitzliegebank nach einem der Ansprüche 1 - 7,
**dadurch gekennzeichnet,**
**daß** die Sitzbreite des Sitz- und Rückenlehnenteils (3, 4) und die Liegenbreite der Matratze (7) sowie gegebenenfalls des Matratzenteils (9) unterschiedlich sind.

9. Sitzliegebank nach einem der Ansprüche 1 - 8,
**dadurch gekennzeichnet,**
**daß** die rückseitig am Rückenlehnenteil (4) befindliche Matratze (7) in der aufrechten Sitzlage des Rückenlehnenteils (4) in einen das Einrichtungsteil (13) bildenden Einbauschrank in dem betreffenden Fahrzeug völlig oder teilweise eintaucht.

10. Sitzliegebank nach Anspruch 9,
**dadurch gekennzeichnet,**
**daß** an dem das Sitzteil (3) und das Rückenlehnenteil (4) tragenden Gestell (2) eine die Matratze (7) seitlich abdeckende Blende (15) angeordnet ist.

11. Sitzliegebank nach Anspruch 10,
**dadurch gekennzeichnet,**
**daß** die die Matratze (7) seitlich abdeckende Blende (15) bündig an die Öffnung des den Einbauschrank im betreffenden Fahrzeug bildenden Einrichtungsteils (13) anschließt.

12. Sitzliegebank nach einem der Ansprüche 1 - 11,
**dadurch gekennzeichnet,**
**daß** das Rückenlehnenteil (4) und die Matratze (7) ein gemeinsames, zwischen der Matratze (7) und dem Rückenlehnenteil (4) befindliches Federungssystem (16) haben.

13. Sitzliegebank nach Anspruch 12,
**dadurch gekennzeichnet,**
**daß** das Federungssystem (16) zwischen dem Rückenlehnenteil (4) und der Matratze (7) aus einem Lattenrost besteht.

14. Sitzliegebank nach Anspruch 13,
**dadurch gekennzeichnet,**
**daß** das Federungssystem (16) zwischen dem Rückenlehnenteil (4) und der Matratze (7) zur Lehnenseite hin erste Federelemente (17) und zur Matratzenseite hin zweite Federelemente (18) aufweist und diese Federelemente (17, 18) entsprechend dem Sitzkomfort einerseits und dem Liegenkomfort andererseits unterschiedlich ausgebildet sind.

15. Sitzliegebank nach einem der Ansprüche 1 - 14,
**dadurch gekennzeichnet,**
**daß** am Sitzteil (3) Anbauten, wie Armlehnen (20) und/oder Klapptische (19) angeordnet sind, die beim Schwenken zwischen der Sitzposition und der Liegenposition mitschwenken.

16. Sitzliegebank nach einem der Ansprüche 1 - 15,
**dadurch gekennzeichnet,**
**daß** sie in dem betreffenden Fahrzeug mit Vordersitzen (10) kombiniert ist, die entgegen der Vorwärtsfahrtrichtung drehbar sind, wobei in der entgegen der Vorwärtsfahrtrichtung gedrehten Position der Vordersitze (10) und in der Liegenposition der Liegesitzbank (1) deren vorn übergekipptes Rückenlehnenteil (4) über das Sitzteil (11) der Vordersitze (10) hinweg bis an deren Rückenlehnenteil (12) heranreicht.

## Claims

1. Reclining bench seat for motorhomes, caravans, vans or the like, having a frame on which a seat part and a backrest part are arranged, the backrest part being mounted such that it can be pivoted between a sitting position and a lying position and, in the lying position, the rear of the backrest part being arranged located at the top, **characterized in that** the frame (2), including the seat part (3) and the backrest part (4), is mounted such that it can be pivoted between the sitting position and the lying position.

2. Reclining bench seat according to Claim 1, **characterized in that** a mattress (7) is fixedly arranged on the rear of the backrest part (4) and, with its side facing away from the rear of the backrest part (4), forms a lying area (8).

3. Reclining bench seat according to Claim 2, **characterized in that** a mattress part (9) is provided in addition to the mattress (7) for the purpose of enlarging the lying area (8).

4. Reclining bench seat according to Claim 3, **characterized in that** the mattress part (9) is detachably fastened to the mattress (7) fixed to the rear of the backrest part (4).

5. Reclining bench seat according to Claim 3 or 4, **characterized in that** the mattress part (9) that can be detached from the mattress (7) or is loose relative thereto can be mounted on a part of the furnishings (13) of the relevant vehicle and, in the mounted position, closely adjoins the mattress (7) arranged on the rear of the backrest part (4) in the tilted, lying position of seat part and backrest part (4).

6. Reclining bench seat according to Claim 3, **characterized in that,** in the non-use position, the mattress part (9) is arranged to rest on the side of the mattress forming the lying area (8).

7. Reclining bench seat according to Claim 6, **characterized in that** the mattress part (9) is attached to the backrest part (4) or to the mattress (7) arranged fixedly thereon, such that it can pivot.

8. Reclining bench seat according to one of Claims 1-7, **characterized in that** the sitting width of the seat and backrest part (3, 4) and the lying width of the mattress (7) and, if appropriate, of the mattress part (9) are different.

9. Reclining bench seat according to one of Claims 1-8, **characterized in that** the mattress (7) located on the rear of the backrest part (4) in the upright, sitting position of the backrest part (4) dips fully or partly into a fitted cupboard in the relevant vehicle, forming the part of the furnishings (13).

10. Reclining bench seat according to Claim 9, **characterized in that** on the frame (2) carrying the seat part (3) and the backrest part (4) there is arranged a shield (15) covering the mattress (7) at the side.

11. Reclining bench seat according to Claim 10, **characterized in that** the shield (15) covering the mattress (7) at the side adjoins the opening of the part of the furnishings (13), forming the fitted cupboard in the relevant vehicle, so as to be flush.

12. Reclining bench seat according to one of Claims 1-11, **characterized in that** the backrest part (4) and the mattress (7) have a common springing system (16) located between the mattress (7) and the backrest part (4).

13. Reclining bench seat according to Claim 12, **characterized in that** the springing system (16) between the backrest part (4) and the mattress (7) comprises a lattice frame.

14. Reclining bench seat according to Claim 13, **characterized in that** the springing system (16) between the backrest part (4) and the mattress (7) has first spring elements (17) towards the leaning side and second spring elements (18) towards the mattress side, and these spring elements (17, 18) are formed differently in accordance with the sitting comfort, on the one hand, and the lying comfort, on the other hand.

15. Reclining bench seat according to one of Claims 1-14, **characterized in that** attachments, such as armrests (20) and/or folding tables (19) are arranged on the seat part (3) and, during pivoting between the sitting position and the lying position, pivot with them.

16. Reclining bench seat according to one of Claims 1-15, **characterized in that**, in the relevant vehicle, it is combined with front seats (10) which can be rotated counter to the forward direction of travel, in the position of the front seats (10) rotated counter to the forward direction of travel and, in the lying position of the reclining bench seat (1), the backrest part (4) of the latter tilted over forwards reaching over the seat part (11) of the front seats (10) as far as the backrest part (12) of the latter.

## Revendications

1. Banquette rabattable pour camping-cars, caravanes, camionnettes ou similaires, comprenant un bâti, sur lequel une partie de siège et une partie de dossier sont disposées, la partie de dossier étant montée de manière pivotante entre une position de siège et une position de couchette, et dans la position de couchette, le côté arrière de la partie de dossier étant tourné vers le haut, **caractérisée en ce que** le bâti (2), y compris la partie de siège (3) et la partie de dossier (4) est monté de manière à pouvoir pivoter entre la position de siège et la position de couchette.

2. Banquette rabattable selon la revendication 1, **caractérisée en ce qu'**un matelas (7) est fixé sur le côté arrière de la partie de dossier (4), et forme avec son côté opposé au côté arrière de la partie de dossier (4) une surface de couchette (8).

3. Banquette rabattable selon la revendication 2, **caractérisée en ce que** pour compléter le matelas (7) afin d'augmenter la surface de couchette (8), on prévoit une partie de matelas (9).

4. Banquette rabattable selon la revendication 3, **caractérisée en ce que** la partie de matelas (9) est fixée de manière amovible au matelas (7) fixé sur le côté arrière de la partie de dossier (4).

5. Banquette rabattable selon la revendication 3 ou 4, **caractérisée en ce que** la partie de matelas (9) pouvant être séparée du matelas (7) ou libre par rapport à celui-ci peut être montée sur une partie de dispositif (13) du véhicule concerné et se raccorde étroitement dans la position montée au matelas (7) disposé du côté arrière sur la partie de dossier (4) dans la position de couchette basculée de la partie de siège et de la partie de dossier (4).

6. Banquette rabattable selon la revendication 3, **caractérisée en ce que** la partie de matelas (9) est disposée dans la position de non utilisation en appui contre le côté du matelas formant la surface de couchette (8).

7. Banquette rabattable selon la revendication 6, **caractérisée en ce que** la partie de matelas (9) est articulée de manière pivotante sur la partie de dossier (4) ou sur le matelas (7) fixé sur celle-ci.

8. Banquette rabattable selon l'une quelconque des revendications 1 à 7, **caractérisée en ce que** la largeur de siège de la partie de siège et de dossier (3, 4) et la largeur de couchette du matelas (7) ainsi qu'éventuellement de la partie de matelas (9) sont différentes.

9. Banquette rabattable selon l'une quelconque des revendications 1 à 8, **caractérisée en ce que** le matelas (7) disposé du côté arrière contre la partie de dossier (4) pénètre complètement ou en partie dans la position de siège redressée de la partie de dossier (4) dans une armoire encastrée formant la partie de dispositif (13) dans le véhicule concerné.

10. Banquette rabattable selon la revendication 9, **caractérisée en ce que** l'on dispose sur le bâti (2) portant la partie de siège (3) et la partie de dossier (4), un bandeau (15) recouvrant latéralement le matelas (7).

11. Banquette rabattable selon la revendication 10, **caractérisée en ce que** le bandeau (15) recouvrant latéralement le matelas (7) se raccorde en affleurement avec l'ouverture de la partie de dispositif (13) formant l'armoire encastrée dans le véhicule concerné.

12. Banquette rabattable selon l'une quelconque des revendications 1 à 11, **caractérisée en ce que** la partie de dossier (4) et le matelas (7) ont un système de suspension (16) commun, situé entre le matelas (7) et la partie de dossier (4).

13. Banquette rabattable selon la revendication 12, **caractérisée en ce que** le système de suspension (16) entre la partie de dossier (4) et le matelas (7) se compose d'un sommier à lattes.

14. Banquette rabattable selon la revendication 13, **caractérisée en ce que** le système de suspension (16) entre la partie de dossier (4) et le matelas (7) présente, vers le côté du dossier, des premiers éléments de ressort (17) et vers le côté du matelas, des deuxièmes éléments de ressort (18) et ces éléments de ressort (17, 18) sont réalisés différemment en fonction du confort en position assise d'une part et du confort en position couchée d'autre part.

15. Banquette rabattable selon l'une quelconque des revendications 1 à 14, **caractérisée en ce que** des pièces rapportées sont disposées sur la partie de siège (3), comme des accoudoirs (20) et/ou des tables rabattables (19), et pivotent en même temps lors du pivotement entre la position de siège et la position de couchette.

16. Banquette rabattable selon l'une quelconque des revendications 1 à 15, **caractérisée en ce qu'**elle est combinée dans le véhicule en question à des sièges avant (10), qui peuvent tourner à l'encontre de la direction d'avance, et dans la position des sièges avant (10) tournée à l'encontre de la direction d'avance et dans la position de couchette de la banquette rabattable (1), sa partie de dossier (4) rabattue vers l'avant s'étend au-delà de la partie de siège (11) des sièges avant (10) jusqu'à leur partie de dossier (12).
